(19) Europäisches Patentamt
European Patent Office
Office européen des brevets

(11) **EP 3 816 736 A1**

(12) **EUROPÄISCHE PATENTANMELDUNG**

(43) Veröffentlichungstag:
**05.05.2021 Patentblatt 2021/18**

(21) Anmeldenummer: **20203725.5**

(22) Anmeldetag: **23.10.2020**

(51) Int Cl.:
***G05B 13/04*** *(2006.01)*      ***B25J 9/16*** *(2006.01)*
***B25J 13/08*** *(2006.01)*      ***G05B 19/402*** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **30.10.2019 DE 102019129338**

(71) Anmelder: **Pilz GmbH & Co. KG**
**73760 Ostfildern (DE)**

(72) Erfinder:
• **Gold, Tobias**
**73760 Ostfildern (DE)**

• **Völz, Andreas**
**73760 Ostfildern (DE)**
• **Graichen, Knut**
**73760 Ostfildern (DE)**
• **Schleicher, Joachim**
**73760 Ostfildern (DE)**
• **Kretzschmann, Roman**
**73760 Ostfildern (DE)**

(74) Vertreter: **Witte, Weller & Partner Patentanwälte mbB**
**Postfach 10 54 62**
**70047 Stuttgart (DE)**

(54) **MODELLPRÄDIKTIVE INTERAKTIONSREGELUNG**

(57)      Verfahren (10) zur Steuerung eines Roboters (12) während einer Interkation mit seiner Umgebung (20) durch Lösen eines Optimierungsproblems (40) zur Berechnung einer optimalen Stellgröße als Eingabe (18) für eine Robotersteuerung. Das Optimierungsproblem (40) berücksichtigt neben einer Roboterdynamik (26) eine Interaktionsdynamik (36).

Fig. 1

**Beschreibung**

Die vorliegende Erfindung betrifft ein Verfahren und eine Vorrichtung zur Steuerung eines Roboters.

Roboter, insbesondere Industrieroboter, werden zunehmend nicht mehr isoliert eingesetzt, sondern vermehrt in einer Umgebung, in der sie mit Menschen oder anderen Robotern kollaborieren müssen. Die Steuerung eines Roboters wird dadurch zunehmend schwieriger.

Eine Möglichkeit komplexe und multi-variable Prozesse zu steuern ist die sogenannte Modellprädiktive Regelung (MPC). Hierbei wird ein dynamisches Modell des zu regelnden Prozesses verwendet, um das zukünftige Verhalten des Prozesses in Abhängigkeit von den Eingangssignalen und den aktuellen Messwerten zu berechnen. Dies ermöglicht die Berechnung optimaler Eingangssignale, die zu optimalen Ausgangssignalen führen. Eingangs-, Ausgangs- sowie Zustandsbeschränkungen können dabei gleichzeitig berücksichtigt werden. Das Modellverhalten wird bis zu einem bestimmten Zeithorizont $T_{hor}$ vorhergesagt (prädiziert), jedoch wird in der Regel nur das Eingangssignal für den nächsten Zeitschritt verwendet und danach die Optimierung basierend auf dem erreichten Zustand wiederholt. MPC ist durch diese Rückkopplung eine Regelung im Gegensatz zu einer Optimalsteuerung.

DE 10 2017 129 665 zeigt beispielhaft die Steuerung eines Roboters mittels Modellprädiktiver Regelung. Die Regelung hat hier zum Ziel (Regelziel) einen kollisionsfreien Bewegungspfad zu finden, sodass der Roboter von einer Position im Raum zu einer anderen gelangen kann, ohne mit einem statischen oder dynamischen Hindernis zu kollidieren.

Für eine echte Kollaboration zwischen einem Roboter und einem Menschen ist das Ausweichen nicht ausreichend. Vielmehr muss der Roboter zukünftig auch in der Lage sein, direkt mit dem Menschen zu kooperieren, diesen zu berühren oder von diesem geführt zu werden. Ein Kontakt zwischen Menschen und Roboter ist hierbei unausweichlich.

Es ist daher eine Aufgabe der vorliegenden Erfindung ein Verfahren sowie eine Vorrichtung anzugeben, die eine Steuerung eines Roboters während einer Interaktion mit seiner Umgebung ermöglicht. Insbesondere ist es eine Aufgabe eine Steuerung anzugeben, die eine Kooperation zwischen Menschen und Robotern gewährt und hierbei möglichst natürlich ist. Ferner ist eine Aufgabe eine Steuerung anzugeben, die sich leicht und kostengünstig realisieren lässt und sich flexibel an verschiedene Applikation anpassen lässt.

Gemäß einem Aspekt der vorliegenden Erfindung wird diese Aufgabe gelöst durch ein Verfahren zur Steuerung eines Roboters während einer Interkation mit seiner Umgebung durch Lösen eines Optimierungsproblems zur Berechnung einer optimalen Stellgröße als Eingabe für eine Robotersteuerung, wobei das Optimierungsproblem neben einer Roboterdynamik eine Interaktionsdynamik berücksichtigt.

Gemäß einem weiteren Aspekt der vorliegenden Erfindung wird die Aufgabe ferner gelöst durch eine Vorrichtung zur Steuerung eines Roboters während einer Interaktion mit seiner Umgebung mit einer Stellgrößenbestimmungseinheit, die eingerichtet ist, durch Lösen eines Optimierungsproblems eine optimale Stellgröße als Eingabe für eine Robotersteuerung zu berechnen, wobei das Optimierungsproblem neben einer Roboterdynamik eine Interaktionsdynamik berücksichtigt.

Es ist somit eine Idee der vorliegenden Erfindung bei Modellprädiktiver Regelung neben der Roboterdynamik zusätzlich eine Interaktionsdynamik zu berücksichtigen. Mit anderen Worten berücksichtigt das Optimierungsproblem neben der Roboterdynamik den zusätzlich auftretenden Verlauf der Interaktionskräfte.

Die Interaktionskräfte sind diejenigen Kräfte, die auf den Roboter aufgrund der Interaktion mit seiner Umgebung wirken, also beispielsweise Kräfte, die durch einen Kontakt mit einem Menschen oder Gegenstand entstehen oder durch eine bewusste Führung des Roboters durch den Menschen hervorgerufen werden. Die Interaktionskräfte sind somit im Wesentlichen Kontaktkräfte, die zusätzlich zu den natürlichen Kräften (Trägheits-, Zentripetal- und Corioliskräfte) sowie Gravitation, auf den Roboter wirken.

Durch die Berücksichtigung der Interaktionskräfte kann unmittelbar eine Kraft- und Nachgiebigkeitsregelung für einen Roboter realisiert werden, die in die Modellprädiktive Regelung integriert ist. So kann ein einheitlicher Ansatz gefahren werden, bei dem verschiedene Kraft- und Nachgiebigkeitsregelungen für unterschiedliche Anwendungen eingesetzt werden können, ohne hierfür auf eine andere Methodik der Reglung ausweichen zu müssen. D.h. es können unterschiedliche Anwendungen realisiert werden, ohne dass der Regler in seiner Form geändert werden muss, da die Roboterdynamik gleichbleibt. Die Einbeziehung einer Interaktion eines Roboters mit seiner Umgebung ist somit nicht nur einfach möglich, sondern auch flexibel an unterschiedliche Aufgaben anpassbar.

Die Modellprädiktive Regelung, d.h. die optimierungsbasierte Methodik, lässt sich zudem variabel durch Berücksichtigung von zustands- und stellgrößenabhängigen Gleichungsbeschränkungen und Ungleichungsbeschränkungen erweitern. Damit können wesentliche Steuerungsaufgaben eines Roboters mit einer einheitlichen Methodik realisiert werden, wobei insbesondere Abhängigkeiten zwischen den Regelungszielen der einzelnen Steuerungsaufgaben berücksichtigt werden können. Auf diese Weise kann ein natürlicheres Verhalten des Roboters erreicht werden, da die Steuerungsaufgaben ohne einen Bruch in der Methodik realisiert werden können. Das neue Verfahren biete folglich einen einheitlichen Regelungsansatz für Nachgiebigkeits-, Kraft- und Bewegungsregelung sowie hybride Formen davon. Die eingangsgenannte Aufgabe ist damit vollständig gelöst.

Insbesondere kann die Roboterdynamik ein dynamisches Modell des Roboters sein, bei dem beispielsweise dynamische Anteile abhängig von Stellgrößen und Zustandsgrößen des Roboters sind. Die Interaktionsdynamik kann ein dynamisches Kräftemodell sein, bei dem dynamische Anteile abhängig von Roboterzuständen, insbesondere einer Roboterbewegung, sind.

Für die Roboterdynamik und die Interaktionsdynamik können somit eigene Modelle herangezogen werden, die ihren jeweiligen Bereich beschreiben. Ferner können diese Modelle ineinandergreifen, um gegenseitige Abhängigkeiten auszudrücken. Vorteilhaft kann hierbei, insbesondere auf bekannte Modelle für die Roboterdynamik zurückgriffen werden, die sich bspw. aus einem allgemein gültigen Bewegungsdifferentialgleichungssystem oder Vereinfachungen hiervon herleiten lassen. Durch die Möglichkeit bekannte Ansätze der Modelprädiktiven Regelung zur Robotersteuerung weiterzuverwenden, lässt dich das neue Verfahren besonders einfach und kostengünstig realisieren.

Gemäß dem neuen Verfahren kann das Optimierungsproblem ein Kostenfunktional aufweisen, welches die Interaktionskräfte gewichtet.

Es ist somit möglich gemäß dem neuen Verfahren dedizierte Interaktionskräfte bei der Steuerung zu bewerten. Bspw. könnte im Interaktionsfall die Bewegung eines Gelenks in eine Richtung ein Anstieg eines externen Moments bewirken, wohingegen eine Bewegung in die andere Richtung eine Verringerung des externen Moments verursacht. Die externen Momente resultieren aus den Interaktionskräften. Auf dies Weise ist es möglich, dass der Roboter bei einem Kontakt aktiv nachgibt.

In einer weiteren Ausgestaltung kann das Kostenfunktional die Interaktionskräfte, Stellgrößen und Zustände des Roboters gewichten. Es ist somit möglich, mit einer einzelnen Gütefunktion sowohl die Interaktionskräfte, Stellgrößen und Zustände zu berücksichtigen und zu verknüpfen. Auf diese Weise können Abhängigkeiten zwischen den Größen in einer einzelnen Optimierung berücksichtigt werden. Die Ausgestaltung trägt zu einer Vereinheitlichung der Regelung bei, in der verschiedene Aspekte der Robotersteuerung durch ein Optimierungsproblem gelöst werden können.

In einer weiteren Ausgestaltung kann das Kostenfunktional dazu eingerichtet sein, die Interaktionskräfte zu minimieren. Mit anderen Worten kann das Regelziel der Optimierung darauf ausgelegt sein, die extern auf den Roboter einwirkenden Kräfte zu minimieren, wodurch ein ausweichendes Verhalten des Roboters erreicht wird. Auf diese Weise kann insbesondere ein Verletzungsrisiko bei der Mensch-Roboter-Kollaboration verringert werden, indem zwar ein Kontakt erlaubt ist, der Roboter aber möglichst aktiv nachzugeben versucht.

In einer weiteren Ausgestaltung kann das Kostenfunktional ferner dazu eingerichtet sein, die Interaktionskräfte auf einen Sollwert zu optimieren. Auf diese Weise kann der Roboter, anstatt unter der Einwirkung einer Interaktionskraft zurückzuweichen, auch eingeregelt werden, eine bestimmte Kraft aufrechtzuerhalten. Diese Ausgestaltung ermöglicht somit eine Kraftregelung anstelle einer Nachgiebigkeitsregelung, wobei auch eine Kombination beider Verhaltensweisen denkbar ist. Das Regelungsverfahren deckt so verschiedene Anwendungsfällen ab.

Das dynamische Kräftemodell kann eine Beschreibung der Änderung eines externen Moments oder einer externen Kraft in Abhängigkeit einer Steifigkeit einer mit dem Roboter interagierenden Umgebung sowie einer Gelenkgeschwindigkeit oder einer kartesischen Geschwindigkeit des Roboters sein.

Insbesondere kann die die Steifigkeit des dynamischen Kräftemodells während der Interaktion als ungleich Null und in einem interaktionsfreien Zustand als Null angenommen werden. Auf diese Weise kann zwischen einem Interaktionszustand und einem interaktionsfreien Zustand unterschieden werden, wobei die Berücksichtigung des Kräftemodells nur in einem Interaktionszustand stattfindet und im Übrigen unberücksichtigt bleibt. Die Einbeziehung des Kräftemodells erfolgt somit nach Bedarf, wodurch die Regelung insgesamt optimiert wird.

Die Steifigkeit des dynamischen Kräftemodells kann auch als konstant angenommen werden. Durch diese Annahme kann das Kräftemodell bei entsprechenden Anwendungsfällen wie beispielsweise bei einer Handführung des Roboters vereinfacht werden. Dies erleichtert die Lösung des Optimierungsproblems und reduziert den Ressourcenverbrauch für die Berechnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1     eine Übersicht eines Regelungsverfahrens nach einer Ausführungsform der vorliegenden Erfindung,

Fig. 2     eine formale Repräsentation eines Optimierungsproblems ohne Berücksichtigung einer Interaktionsdynamik,

Fig. 3     eine formale Repräsentation eines Optimierungsproblems unter Berücksichtigung einer Interaktionsdynamik bei einer Handführung,

Fig. 4     eine formale Repräsentation eines Optimierungsproblems unter Berücksichtigung einer Interaktionsdynamik bei einer hybriden Kraft-/Bewegungsregelung, und

Fig. 5    eine schematische Darstellung zur Schätzung einer Steifigkeit.

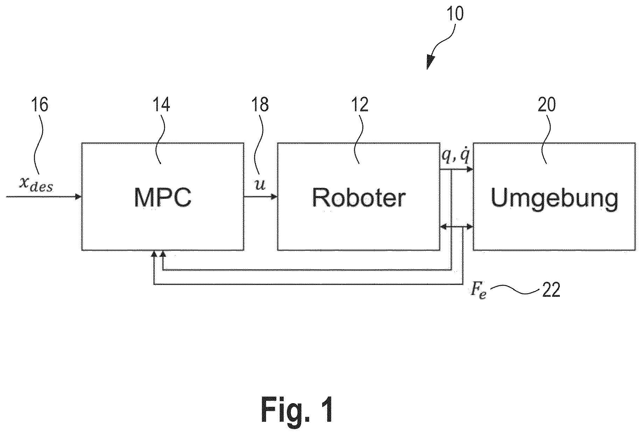

Fig. 1 zeigt in einer Übersicht das neue Verfahren 10 zur Steuerung eines Roboters 12.

Zentral ist ein Roboter 12 angedeutet, bspw. ein Industrieroboter. Industrieroboter sind universell, programmierbare Maschinen zur Handhabung, Montage oder Bearbeitung von Werkstücken. In der Regel umfasst ein Industrieroboter einen Manipulator (Roboterarm), eine Steuerung sowie einen Effektor, der als Werkzeug oder Greifer ausgebildet sein kann.

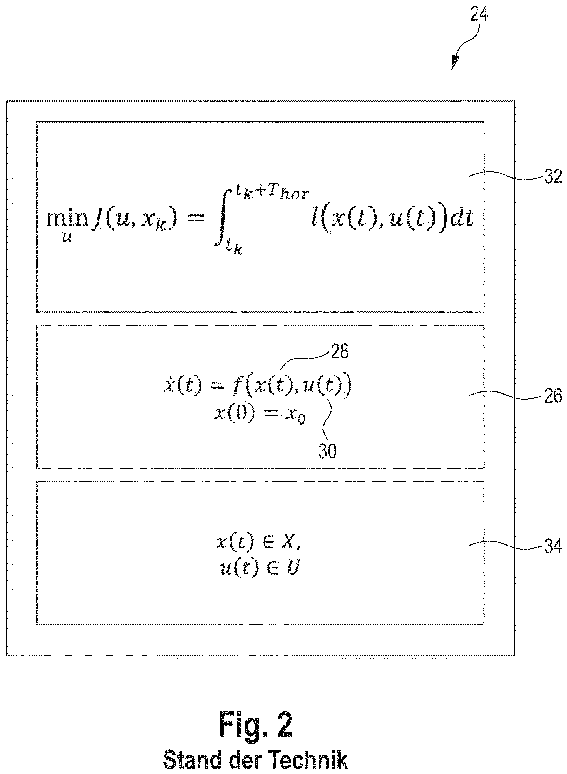

Linksseitig ist ein Modellprädiktiver Kontroller 14 (engl. model predictive control (MPC)) angedeutet. Hierbei handelt es sich um einen Regler, der aus einer Zielvorgabe 16, die hier als cartesische Koordinate $X_{des}$ angegeben ist, eine Stellgröße $u$ als Eingabe 18 für den Roboter 12 bestimmt. Anhand der Eingabe 18 werden Antriebe des Roboters 12 eingestellt, so dass dieser eine definierte Bewegung ausführt (q,q). Das grundlegende Prinzip der Modelprädikativen Regelung unter Verwendung einer Roboterdynamik wird im Nachfolgenden anhand der Fig. 2 erläutert.

Rechtseitig ist die Umgebung 20, mit der der Roboter 12 interagiert, angedeutet. Kräfte 22 (im Folgenden als Interaktionskräfte bezeichnet), die auf den Roboter 12 einwirken, drücken die Interkation mit der Umgebung 20 aus. Die Interaktionskräfte 22 können Kontaktkräfte sein, die aufgrund eines Kontakts mit einem Gegenstand in der Umgebung 20 entstehen. Bei Modellprädiktiver Regelung von Robotern wurden Interaktionskräfte bisher nicht direkt berücksichtigt.

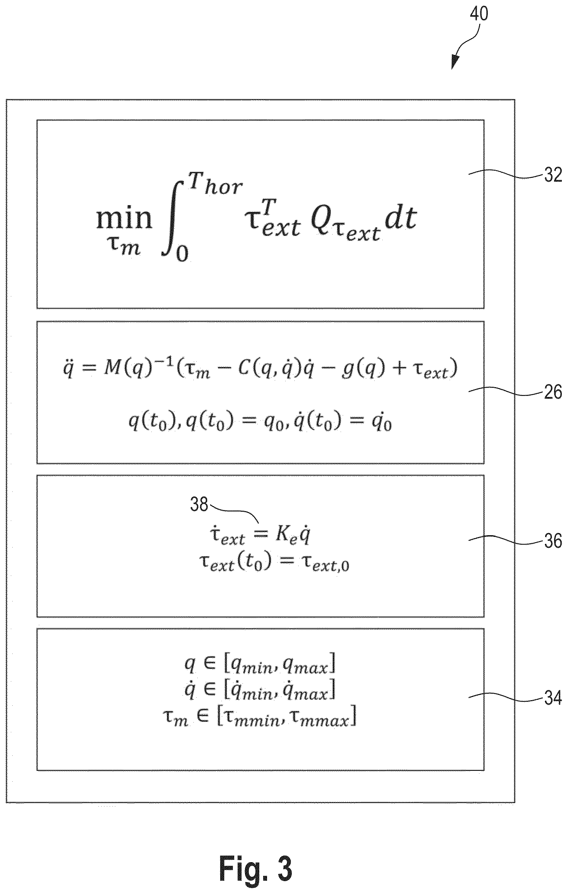

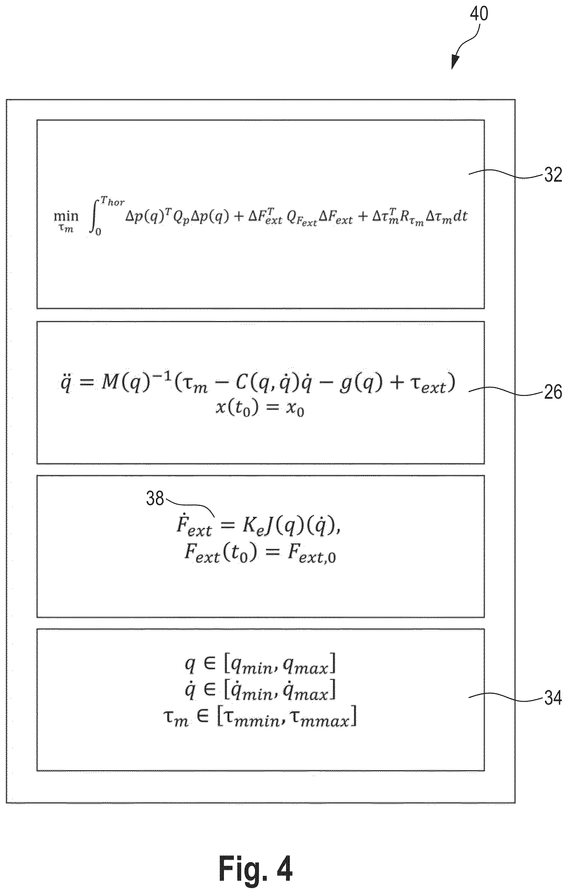

Fig. 3 und Fig. 4 zeigen jeweils Beispiele für das neue Verfahren, welches die Interaktionskräfte 22 bei Modellprädiktiver Regelung berücksichtigt. Das Verfahren wird daher auch als MPIC (engl. model predictive interaction control) bezeichnet.

MPIC berücksichtigt zusätzlich zur Roboterdynamik eine Interaktionsdynamik, indem eine Kraftdynamikgleichung eingeführt wird, welche das Verhalten der Interaktionskräfte 22 ( $F_{ext}$) bzw. der daraus resultierenden Momente $\tau_{ext} \in R^N$ beschreibt.

Die Interaktionsdynamik beschreibt somit das Verhalten der Interaktionskräfte, die auf die Roboterstruktur einwirken. Beim MPIC werden Interkationen somit unmittelbar berücksichtigt. Das zu lösende Optimierungsproblem bei MPIC unterscheidet sich vom normalen MPC somit nur durch die Wahl des Kostenfunktionals sowie etwaigen Beschränkungen. Im Übrigen bleibt die Systematik, insbesondere die Roboterdynamik gleich. Vorteilhaft können somit bekannte Gleichungs- und Ungleichungsbeschränkungen für Zustände und Stellgrößen aus der Robotersteuerungen nach MPC weiterhin bei MPIC angewandt werden.

Im Allgemeinen lässt sich ein Industrieroboter durch ein Bewegungsdifferentialgleichungssystem beschreiben:

$$M(q)\ddot{q} + C(q,\dot{q})\dot{q} + g(q) + \tau_{ext} = \tau_J$$

Dabei stellt M die Massenträgheitsmatrix dar, der Vektor C bezeichnet die generalisierten Zwangsmomente verursacht durch Zentripetal- und Corioliskräfte in den Gelenken, und $g$ ist der Vektor der generalisierten Gravitationsmomente. $\tau_J$ beschreibt das von dem Getriebe übertragene Moment, welches sich aus dem Motordrehmoment abzüglich der Reibmomente des Motors und des Getriebes ergibt. $q(t)$ bezeichnet den Vektor der Bewegungskoordinaten der Achsen. $\tau_{ext}$ bildet die externen Einflüsse ab, die auf das Momentengleichgewicht wirken und u.a. die Interaktionsmomente umfasst. Das externe Moment $\tau_{ext}$ kann dabei über einen konfigurationsabhängigen Zusammenhang

$$\tau_{ext} = J^T(q)F_{ext}$$

berechnet werden.

Fig. 2 zeigt eine formale Repräsentation eines dynamischen Optimierungsproblems nach MPC, welches hier in seiner Gesamtheit mit der Bezugsziffer 24 bezeichnet ist. Ausgangspunkt ist das Systemmodell, welches die Roboterdynamik 26 des bewegten Systems, beispielsweise des Manipulators, mit den Zuständen 28 und Stellgrößen 30 beschreibt. Die Roboterdynamik 26 kann für eine Positions- bzw. Geschwindigkeitsregelung vereinfacht als Integrator $\dot{q} = u$ mit den Zuständen $x = q$ und den Stellgrößen $\dot{q}$ oder als Doppelintegrator $\ddot{q} = u$ mit den Zuständen $x\left[q^T, \dot{q}^T\right]^T$ und den Stellgrößen $u = \ddot{q}$ angenommen werden.

Ein Kostenfunktional 32 gewichtet die Zustände 28 und Stellgrößen 30. Aufgabe der Optimierung ist es, aus den in der Regel unendlich vielen Steuerfunktionen die optimale Steuerfunktion unter Berücksichtigung von Beschränkungen 34 herauszufinden, die das Kostenfunktional 32 minimiert, um eine optimale Stellgröße als Eingabe 18 für eine Robotersteuerung zu bestimmen.

MPIC gemäß Fig. 3 und 4 ergänzt das Optimierungsproblem nach MPC 24, indem neben der Roboterdynamik 26 eine Interaktionsdynamik 36 berücksichtigt wird. Die Interaktionsdynamik 36 kann eine Kraftdynamikgleichung 38 zur Beschreibung des Verhaltens der externen Kräfte 22 ($F_{ext}$) bzw. der daraus resultierenden externen Momente $\tau_{ext}$ sein. Die Interaktionskräfte 22 können damit als weitere Zustände berücksichtigt werden, um von dem Optimierungsproblem erfasst und gewichtet zu werden.

Fig. 3 zeigt ein Optimierungsproblem 40 gemäß einem Ausführungsbeispiel für MPIC. Die Regelung realisiert hier eine Handführung des Roboters. Die Kraftdynamikgleichung 38 (im Gelenkraum) lautet:

$$\dot{\tau}_{ext} = K_e \dot{q}$$

Der Gedanke hierbei ist, dass in einem Interaktionsfall eine Bewegung in eine Richtung einen Anstieg des externen Moments bewirkt, wohingegen eine Bewegung in die entgegengesetzte Richtung eine Verringerung des externen Moments verursacht. Das Kostenfunktional ist ferner so eingerichtet, die externen Kräfte zu minimieren. Dies führt zu einer Nachgiebigkeitsregelung, wonach der Roboter versucht, bei einer Berührung zurückzuweichen. Die Steifigkeit $K_e$ ist hier als konstant gewählt.

Die Applikation für die vorstehende Regelung ist eine Handführung des Roboters durch den Menschen. Die Nachgiebigkeitsregelung ermöglicht es, den Roboter durch Berühren zu "lenken". Wenn der Mensch den Roboter berührt und in eine Richtung drückt, weicht dieser in diese Richtung aus. Der Roboter folgt somit dem Menschen auf eine natürliche Weise.

Fig. 4 zeigt ein weiteres Optimierungsproblem 40 gemäß einem Ausführungsbeispiel für MPIC. Hierbei realisiert die Regelung eine hybride Kraft- /Bewegungsregelung.

Die hybride Kraft- /Bewegungsregelung unterscheidet zwischen bewegungsgeregelten und kraftgeregelten kartesischen Richtungen, d.h. in eine definierte kartesische Richtung erfolgt eine Kraftregelung, während in einer andere kartesische Richtung eine Positionsregelung erfolgt.

Eine mögliche Applikation für hybride Kraft- /Bewegungsregelung ist exemplarisch das Wischen einer Tafel. Hierbei wird in Richtung der Tafel (z-Richtung) kraftgeregelt, um einen Schwamm mit einem definierten Druck auf die Tafel zu drücken. Entlang der Schreibrichtung der Tafel (x-Richtung) wird positionsgeregelt, um einen gleichmäßigen Vorschub zu ermöglichen. Senkrecht zu Schreibrichtung und parallel zur Tafel (y-Richtung) kann wiederum kraftgeregelt werden, sodass beispielsweise der Roboter durch einen Menschen in eine neue Zeile gedrückt werden kann.

Fig. 4 zeigt ein entsprechendes Optimierungsproblem 40 im kartesischen Raum. Die Kraftdynamikgleichung 38 (im kartesischen Raum) ist hier:

$$\dot{F}_{ext} = K_e J(q) \dot{q}$$

Ein Zusammenhang zwischen kartesischen Raum und Gelenkraum kann grundsätzlich über die Jacobi-Matrix $J(q)$ hergestellt werden.

Bei dem Optimierungsproblem 40 für eine Kraft- /Bewegungsregelung werden durch das Kostenfunktional 32 sowohl eine Abweichung zu einer gewünschten kartesischen Position als auch eine Abweichung von einer gewünschten Kraft berücksichtigt.

Sowohl bei dem Optimierungsproblem gemäß Fig. 3 als auch bei dem Optimierungsproblem gemäß Fig. 4 ist die Roboterdynamik 26 gleich, nämlich:

$$\ddot{q} = M(q)^{-1} \left( \tau_m - C(q,\dot{q}) \dot{q} - g(q) + \tau_{ext} \right)$$

Das Optimierungsproblem der beiden Applikationen unterscheidet sich somit nur durch die zusätzliche Kräftegleichung 38, dem Kostenfunktional 32 sowie ergänzenden Beschränkungen 34.

Grundsätzlich werden die externen Kräfte 22 nur im Interaktionsfall berücksichtigt. Dies kann erreicht werden, indem eine virtuelle Steifigkeit während einer freien Bewegung gleich 0 angenommen wird und nur im Interaktionsfall die Kräfte prädiziert werden.

Ferner kann für bestimmte Applikationen anstelle einer konstanten Steifigkeit $K_e$ die Steifigkeit auch geschätzt werden. Hierfür kann bspw. ein lineares Federmodell $F_{ext} = K_e(p - p_{ref})$ der Umgebung angenommen werden, woraus sich eine Steifigkeit wie folgt berechnen lässt:

$$\hat{K}_e = \frac{F_{ext}}{(p - p_{ref})}$$

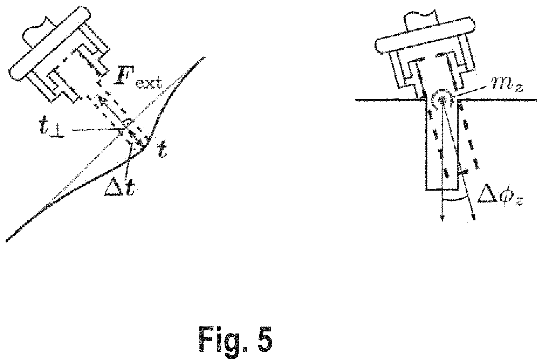

Hier bei beschreibt $p$ die Endeffektorposition und $p_{ref}$ eine Referenzposition (auf der Normalen von unverformter Umgebung und Endeffektorposition) des unverformten Gegenstands. Der Zusammenhang ist in Fig. 5 dargestellt.

Um die Information aus einem vergangenen Zeitschritt mit in die Schätzung einfließen zu lassen, kann ein rekursiver Least-Squares-Schätzer angewandt werden. Hierbei wird, wie folgend im skalaren Fall gezeigt, der Schätzwert in jedem Zeitschritt $k$ durch die Messung aktualisiert.

$$\hat{K}_e(k+1) = \hat{K}_e(k) + \gamma(k+1)\left(F_{ext}(k) - \hat{K}_e(k)\left(p(k) - p_{ref}(k)\right)\right)$$

Das Gewicht $y(k+1)$ bestimmt dabei, wie stark die aktuelle Messung in die Schätzung einfließt.

Wie bei MPC kann auch die Lösung der Optimierungsprobleme 40 gemäß MPIC auf verschiedene Weise über verschiedene numerische Ansätze erfolgen. In einem bevorzugten Ausführungsbeispiel erfolgt die numerische Lösung mit einem Gradientenverfahren und der erweiterten Lagrange-Methode.

Kern dieses Ansatzes ist das Überführen des dynamischen Optimierungsproblems mit Beschränkungen in ein unbeschränktes Optimierungsproblem. Mit anderen Worten wird das Optimierungsproblem auf die Optimierung einer Hilfsfunktion ohne Nebenbedingungen reduziert. Bei der Überführung werden die Beschränkungen mit reellen Faktoren, den sogenannten Lagrange-Multiplikatoren, multipliziert und in die Zielfunktion eingebaut. Mit positiven Lagrange-Multiplikatoren wird eine Verletzung der Beschränkungen bestraft.

Die erweiterte Lagrange-Methode umfasst zusätzlich eine quadratische Straffunktion, die über einen weiteren Multiplikator in die Zielfunktion eingebaut wird.

Die resultierende Hilfsfunktion, die auch als erweiterte Lagrange-Funktion bezeichnet wird, lautet:

$$L(x,\mu,\rho) = f(x) + \mu g(x) + \frac{1}{2}\rho g(x)^2$$

mit dem Lagrange-Multiplikator $\mu$ und dem Strafparameter $\rho$. Dabei entspricht der vordere Anteil $f(x) + \mu g(x)$ der gewöhnlichen Lagrange-Funktion und der hintere Teil $\frac{1}{2}\rho g(x)^2$ einer quadratischen Straffunktion. Unter Annahme von starker Dualität und der Existenz einer optimalen Lösung $x^*$, $\mu^*$ kann gezeigt werden, dass für jedes $\rho \geq 0$ die Sattelpunktbedingung

$$L\left(x^*,\mu,\rho\right) \leq L\left(x^*,\mu^*,\rho^*\right) \leq L\left(x,\mu^*,\rho\right)$$

erfüllt sein muss. Daraus ist ersichtlich, dass die Lagrange-Funktion bezüglich der Variablen x minimiert und bezüglich der Lagrange-Multiplikatoren $\mu$ maximiert werden muss, d.h. ein neues Optimierungsproblem

$$\max_{u} \min_{x} L(x,\mu,\rho)$$

gelöst werden muss.

Dabei wird über eine Iteration $k$ zunächst das unterlagerte Minimierungsproblem

$$x^{(k+1)} = \arg\min_{x} L\left(x, \mu^{(k)}, \rho^{(k)}\right) .$$

formuliert, welches durch ein Gradientenverfahren gelöst wird. Anschließend werden die Lagrange-Multiplikatoren per steilstem Aufstieg

$$\mu^{(k)} = \mu^{(k)} + \rho^{(k)} g\left(x^{(k)}\right)$$

mit dem Strafparameter p(k) als Schrittweite aktualisiert. Die Konvergenz des Verfahrens kann durch eine Adaption des Strafparameters erheblich verbessert werden. Dabei hat sich die Heuristik

$$\rho^{(k+1)} = \begin{cases} \beta_{\text{inc}}\, \rho^{(k)} & \left| g\left(x^{(k)}\right)\right| \geq \gamma_{\text{inc}} \left| g\left(x^{(k-1)}\right)\right| \; \wedge \; \left| g\left(x^{(k)}\right)\right| > \varepsilon_g \\ \beta_{\text{dec}}\, \rho^{(k)} & \left| g\left(x^{(k)}\right)\right| \leq \gamma_{\text{dec}}\, \varepsilon_g \\ \rho^{(k)} & \text{sonst} \end{cases}$$

mit den Faktoren $\beta_{inc} > 1$, $\beta_{dec} < 1$, $\gamma_{inc}$ und $\gamma_{dec} < 1$ $\beta_{inc} > 1$, $\beta_{dec} < 1$, und der absoluten Toleranz $\varepsilon_g$ in der praktischen Anwendung bewährt.

Falls durch die Minimierung keine ausreichende Verbesserung der Beschränkung erzielt wurde, wird der Strafparameter weiter erhöht. Sobald die Beschränkung mit der geforderten Toleranz eingehalten wird, kann der Strafparameter wieder reduziert werden. Das Vorgehen wird wiederholt bis eine maximale Iterationszahl $k = N_{mult}$ erreicht ist oder die Minimierung konvergiert ist und alle Beschränkungen eingehalten sind.

Es versteht sich, dass das vorstehende numerische Verfahren nur eine Möglichkeit zur Lösung des Optimierungsproblems darstellt. Andere Verfahren können in gleicher Weise angewandt werden, ohne den Rahmen der Erfindung zu verlassen.

Insgesamt ermöglicht MPIC einen einheitlichen Regelungssatz für Nachgiebigkeits-, Kraft- und Bewegungsregelung sowie etwaige hybride Formen hiervon. Die angeführten Ausführungsbeispiele sind jedoch nur exemplarisch zu verstehen und schränken den Schutzgegenstand nicht ein. Vielmehr bestimmt sich der Schutzgegenstand aus den nachfolgenden Ansprüche.

## Patentansprüche

1. Verfahren (10) zur Steuerung eines Roboters (12) während einer Interkation mit seiner Umgebung (20) durch Lösen eines Optimierungsproblems (40) zur Berechnung einer optimalen Stellgröße als Eingabe (18) für eine Robotersteuerung, wobei das Optimierungsproblem (40) neben einer Roboterdynamik (26) eine Interaktionsdynamik (36) berücksichtigt.

2. Verfahren nach Anspruch 1, wobei die Roboterdynamik (26) einem dynamischen Modell des Roboters (12) entspricht und die Interaktionsdynamik (36) ein dynamisches Kräftemodell ist, bei dem dynamische Anteile abhängig von einer Roboterbewegung sind.

3. Verfahren nach Anspruch 1 oder 2, wobei das Optimierungsproblem (40) ein Kostenfunktional (32) aufweist, welches Interaktionskräfte (22) gewichtet.

4. Verfahren nach Anspruch 3, wobei das Kostenfunktional (32) die Interaktionskräfte (22), Stellgrößen (30) und Zustände (28) des Roboters (12) gewichtet.

5. Verfahren nach Anspruch 3 oder 4, wobei das Kostenfunktional (32) dazu eingerichtet ist, die Interaktionskräfte (22) zu minimieren.

6. Verfahren nach einem der Ansprüche 3 bis 5, wobei das Kostenfunktional (32) dazu eingerichtet ist, die Interaktionskräfte (22) auf einen Sollwert zu optimieren.

7. Verfahren nach einem der Ansprüche 2 bis 6, wobei das dynamische Kräftemodell eine Beschreibung der Änderung eines externen Moments oder einer externen Kraft in Abhängigkeit einer Steifigkeit einer mit dem Roboter interagierenden Umgebung sowie einer Gelenkgeschwindigkeit oder einer kartesischen Geschwindigkeit des Roboters ist.

8. Verfahren nach Anspruch 7, wobei die Steifigkeit des dynamischen Kräftemodells während der Interaktion als ungleich Null und in einem interaktionsfreien Zustand als Null angenommen wird.

9. Verfahren nach einem der Ansprüche 7 oder 8, wobei die Steifigkeit des dynamischen Kräftemodells als konstant angenommen wird.

**10.** Vorrichtung zur Steuerung eines Roboters (12) während einer Interkation mit seiner Umgebung (20) mit einer Stellgrößenbestimmungseinheit, die eingerichtet ist, durch Lösen eines Optimierungsproblems (40) eine optimale Stellgröße als Eingabe (18) für eine Robotersteuerung zu berechnen, wobei das Optimierungsproblem (40) neben einer Roboterdynamik (26) eine Interaktionsdynamik (36) berücksichtigt.

**Fig. 1**

$$\min_{u} J(u, x_k) = \int_{t_k}^{t_k + T_{hor}} l\big(x(t), u(t)\big) dt$$

$$\dot{x}(t) = f\big(x(t), u(t)\big)$$
$$x(0) = x_0$$

$$x(t) \in X,$$
$$u(t) \in U$$

# Fig. 2
**Stand der Technik**

40

$$\min_{\tau_m} \int_0^{T_{hor}} \tau_{ext}^T Q \tau_{ext} \, dt$$

32

$$\ddot{q} = M(q)^{-1}(\tau_m - C(q,\dot{q})\dot{q} - g(q) + \tau_{ext})$$

$$q(t_0), q(t_0) = q_0, \dot{q}(t_0) = \dot{q}_0$$

26

38

$$\dot{\tau}_{ext} = K_e \dot{q}$$
$$\tau_{ext}(t_0) = \tau_{ext,0}$$

36

$$q \in [q_{min}, q_{max}]$$
$$\dot{q} \in [\dot{q}_{min}, \dot{q}_{max}]$$
$$\tau_m \in [\tau_{mmin}, \tau_{mmax}]$$

34

**Fig. 3**

$$\min_{\tau_m} \int_0^{T_{hor}} \Delta p(q)^T Q_p \Delta p(q) + \Delta F_{ext}^T Q_{F_{ext}} \Delta F_{ext} + \Delta \tau_m^T R_{\tau_m} \Delta \tau_m \, dt$$

32

$$\ddot{q} = M(q)^{-1}(\tau_m - C(q,\dot{q})\dot{q} - g(q) + \tau_{ext})$$
$$x(t_0) = x_0$$

26

38

$$\dot{F}_{ext} = K_e J(q)(\dot{q}),$$
$$F_{ext}(t_0) = F_{ext,0}$$

$$q \in [q_{min}, q_{max}]$$
$$\dot{q} \in [\dot{q}_{min}, \dot{q}_{max}]$$
$$\tau_m \in [\tau_{mmin}, \tau_{mmax}]$$

34

40

## Fig. 4

**Fig. 5**

**Europäisches Patentamt**
**European Patent Office**
**Office européen des brevets**

# EUROPÄISCHER RECHERCHENBERICHT

**Nummer der Anmeldung**

EP 20 20 3725

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | KILLPACK MARC D ET AL: "Model predictive control for fast reaching in clutter", AUTONOMOUS ROBOTS, KLUWER ACADEMIC PUBLISHERS, DORDRECHT, NL, Bd. 40, Nr. 3, 25. September 2015 (2015-09-25), Seiten 537-560, XP035900716, ISSN: 0929-5593, DOI: 10.1007/S10514-015-9492-6 [gefunden am 2015-09-25] | 1-10 | INV. G05B13/04 B25J9/16 B25J13/08 G05B19/402 |
| Y | * das ganze Dokument * | 2,7-9 | |
| X | SHOLEH NOROUZZADEH ET AL: "Towards safe physical human-robot interaction: An online optimal control scheme", RO-MAN, 2012 IEEE, IEEE, 9. September 2012 (2012-09-09), Seiten 503-508, XP032466894, DOI: 10.1109/ROMAN.2012.6343801 ISBN: 978-1-4673-4604-7 | 1,3-6,10 | |
| Y | * das ganze Dokument * | 2,7-9 | **RECHERCHIERTE SACHGEBIETE (IPC)** |
| A | KAPERNICK BARTOSZ ET AL: "The gradient based nonlinear model predictive control software GRAMPC", 2014 EUROPEAN CONTROL CONFERENCE (ECC), EUCA, 24. Juni 2014 (2014-06-24), Seiten 1170-1175, XP032623459, DOI: 10.1109/ECC.2014.6862353 ISBN: 978-3-9524269-1-3 [gefunden am 2014-07-22] * das ganze Dokument * | 1-10 | G05B B25J |

Der vorliegende Recherchenbericht wurde für alle Patentansprüche erstellt

| Recherchenort | Abschlußdatum der Recherche | Prüfer |
|---|---|---|
| München | 12. März 2021 | Wimböck, Thomas |

EPO FORM 1503 03.82 (P04C03)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102017129665